# EUROPEAN PATENT SPECIFICATION

(11) **EP 2 535 665 B1**
(45) Date of publication and mention of the grant of the patent: **01.04.2020**
(21) Application number: 10845667.4
(22) Date of filing: 10.02.2010
(51) Int. Cl.: F25B 1/00, F25B 31/02, F25B 47/02

(54) **AIR-CONDITIONER PROVIDED WITH A HEAT STORAGE DEVICE**
KLIMAANLAGE MIT EINER WÄRMESPEICHERVORRICHTUNG
CLIMATISEUR ÉQUIPÉ D'UN DISPOSITIF DE STOCKAGE DE CHALEUR

(43) Date of publication of application: 19.12.2012
(73) Proprietor: Panasonic Corporation, Kadoma-shi Osaka 571-8501 (JP)
(72) Inventor: SHIMIZU, Akihiko, Osaka-shi, Osaka 540-6207 (JP); IMASAKA, Toshiyuki, Osaka-shi, Osaka 540-6207 (JP); TAKAHASHI, Masatoshi, Osaka-shi, Osaka 540-6207 (JP); KURISUTANI, Hiroharu, Osaka-shi, Osaka 540-6207 (JP); AKAMINE, Ikuo, Osaka-shi, Osaka 540-6207 (JP)
(74) Representative: Eisenführ Speiser
(86) International application number: PCT/JP2010/000821
(87) International publication number: WO 2011/099061

(56) References cited:
- JP-A- 5 010 605
- JP-A- H04 257 673
- JP-A- 2000 130 866
- JP-A- 2002 061 967
- JP-U- H 023 078
- JP-U- 60 148 569
- JP-U- H02 128 065

## Description

### Technical Field

The present invention relates to an air conditioner comprising a heat storage device disposed around a compressor and accommodating a heat storage material that stores therein heat generated by the compressor.

### Background Art

A conventional heat pump air conditioner conducts defrosting during heating by switching a four-way valve from a heating cycle to a cooling cycle when frost has been formed on an outdoor heat exchanger. In this defrosting method, an indoor fan is at a stop, but cold air flows gradually out of an indoor unit, thus posing a problem of warmth being lost.

In view of this, another air conditioner has been proposed having a heat storage device mounted on a compressor in an outdoor unit for the purpose of defrosting by making use of waste heat of the compressor that has been stored in a heat storage tank during heating (see, for example, Patent Document 1).

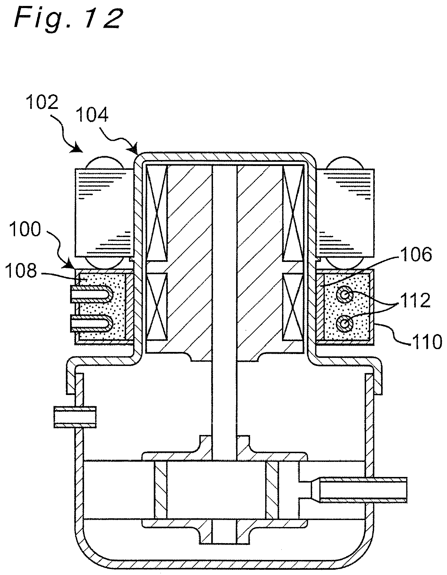

Fig. 12 is a vertical sectional view depicting an example of a conventional heat storage device. In Fig. 12, a heat storage device 100 is fixed to an outer surface of a partition wall 104 of a compressor 102. The heat storage device 100 includes a metallic member 106 made of an aluminum foil plate, a copper plate or the like and wound around the partition wall 104 so as to be held in contact with the outer surface thereof.

The heat storage device 100 accommodates therein a heat storage material 108 to store heat generated by the compressor 102 through the partition wall 104, and the heat storage material 108 is filled in a space formed by an enclosure 110 having a U-shaped vertical section and the metallic member 106 referred to above. In addition to the heat storage material 108, a heating pipe 112 for heating an inflow refrigerant is disposed inside the space.

### Patent Document(s)

Patent Document 1: Japanese Patent No. 2705734

JPH04257673A discloses an air conditioner according to the preamble of claim 1, improving a heating efficiency and performing defrosting operation within a short period of time without reducing heating capability by a method wherein heat generated at a partition wall or the like generated by an electromagnetic induction heating when a motor part is operated is utilized. A compressor is constructed such that a compressing part for forcedly feeding refrigerant and a motor part having a magnet rotor for use in driving this compression part are integrally formed with a metallic partition wall. At the partition wall a heat accumulation device capable of feeding out the refrigerant from an indoor side heat exchanger to an outdoor side heat exchanger is fixed to an outer circumferential wall of an upper partition wall. Heat generated at the upper partition wall generated under an electromagnetic induction heating is accumulated in advance in a heat accumulating material, the refrigerant is heated by heat accumulated at the time of defrosting of the outdoor side heat exchanger and a temperature of the refrigerant flowing into the outdoor side heat exchanger is increased.

### Summary of the Invention

### Problems to be solved by the Invention

As described above, in the conventional heat storage device as shown in Fig. 12, the metallic member 106 is wound around the partition wall 104 of the compressor 102 so as to be held in contact with the outer surface thereof, and when the compressor 102 is in operation, the temperature of the partition wall 104 increases up to a considerably high temperature (for example, more than 100°C), which in turn causes the temperature of the heat storage material 108 to become high. If the temperature of the heat storage material 108 becomes high, the heat storage material 108 boils and deteriorates. Boiling of the heat storage material 108 leads to, for example, rapid evaporation of the heat storage material 108.

The present invention has been developed to overcome the above-described disadvantage. It is accordingly an objective of the present invention to provide a heat storage device capable of preventing boiling or deterioration of a heat storage material that stores heat generated by a compressor and also to provide an air conditioner employing such a heat storage device.

### Means to Solve the Problems

In accomplishing the above objective, the present invention is directed to an air conditioner comprising a compressor, and a heat storage device disposed around the compressor, the heat storage device comprising: a heat storage tank to accommodate a heat storage material and a heat storage heat exchanger in an internal space of a tank body delimited by an outer side wall, a bottom wall, and an inner wall, wherein heat generated by the compressor is transferred through the inner wall of the tank body and stored in the heat storage material wherein a material of the tank body has a greater contractility than a material of the compressor such that a degree of contact between the compressor and the inner wall of the tank body is changed depending on temperature changes of the compressor, in that: i) the degree of contact is increased at a low temperature thereby increasing a heat-transfer performance from the compressor to the heat storage material, and ii) the degree of contact is reduced at a high temperature thereby reducing the heat-transfer performance from the compressor to the heat storage material.

### Effects of the Invention

According to the present invention, when the temperature of the compressor increases, the temperature of the heat storage tank disposed around the compressor also increases. Because the heat storage tank is made of a material greater in contractility than that of the compressor, when the temperature of the heat storage tank increases, the heat storage tank expands and a portion thereof confronting the compressor moves away from the compressor, thereby creating an air layer between the compressor and the heat storage tank. This air layer acts as a heat insulating material and, hence, when the temperature of the compressor becomes excessively high, heat generated by the compressor is difficult to be transferred to the heat storage material in the heat storage tank, thus making it possible to avoid boiling or deterioration of the heat storage material.

Also, when the temperature of the compressor reduces, the heat storage tank contracts and is accordingly brought into close contact with the compressor, thus making it possible to successfully transfer heat generated by the compressor to the heat storage material.

### Brief Description of the Drawings

Fig. 1 is a piping diagram of an air conditioner having a heat storage device according to the present invention.
Fig. 2 is a piping diagram of the air conditioner of Fig. 1, particularly depicting operation thereof and a flow of refrigerant during normal heating.
Fig. 3 is a piping diagram of the air conditioner of Fig. 1, particularly depicting operation thereof and a flow of refrigerant during defrosting/heating.
Fig. 4 is a perspective view of the heat storage device according to the present invention with a compressor and an accumulator installed.
Fig. 5 is an exploded perspective view of the heat storage device of Fig. 4.
Fig. 6 is an exploded perspective view depicting an assembling sequence of the heat storage device of Fig. 4.
Fig. 7 is a cross-sectional view taken along a line VII-VII in Fig. 6(d).
Fig. 8 is an enlarged cross-sectional view in the case where a sheet member provided on the heat storage device of Fig. 4 has a double-layered structure of a resin layer and a metal layer.
Fig. 9 is an enlarged cross-sectional view in the case where the sheet member provided on the heat storage device of Fig. 4 has a three-layer structure of a resin layer, a metal layer and another resin layer.
Fig. 10 is a cross-sectional view taken along a line X-X in Fig. 4.
Fig. 11 is a front view of the heat storage device of Fig. 4.
Fig. 12 is a vertical sectional view of a conventional heat storage device.

### Embodiments for Carrying out the Invention

The present invention is directed to an air conditioner comprising a heat storage device disposed around a compressor. The heat storage device includes a heat storage tank accommodating a heat storage material to store heat generated by the compressor and having a tank body made of a material that is greater in contractility than a material of the compressor. The heat storage device also includes a heat storage heat exchanger accommodated within the tank body of the heat storage tank.

By this construction, the degree of contact between the heat storage tank and the compressor varies depending on temperature changes of the compressor. The heat-transfer performance from the compressor to the heat storage tank increases at low temperatures and reduces at high temperatures, thus making it possible to avoid boiling or deterioration of the heat storage material.

Specifically, a side wall of the tank body has a self-restoring force in an elastic deformation region. This feature can effectively change the degree of contact between the compressor and the heat storage tank depending on temperature changes of the compressor.

Again specifically, the side wall of the tank body has a linear expansion coefficient greater than that of the compressor. This feature can effectively change the degree of contact between the compressor and the heat storage tank depending on temperature changes of the compressor.

Preferably, the heat storage tank is mounted to the compressor with a gap between an inner surface of the heat storage tank and an outer surface of the compressor. The presence of the gap allows the heat storage tank to be brought into close contact with the compressor at low temperatures and to be separated from the compressor at high temperatures.

By way of example, the compressor is made of a metal and the heat storage tank is made of a resin. This selection can effectively change the degree of contact between the compressor and the heat storage tank depending on temperature changes of the compressor.

It is preferred that the side wall of the tank body has a thickness of 1.0-3.0 mm. This range of thickness can effectively change the degree of contact between the compressor and the heat storage tank depending on temperature changes of the compressor.

It is also preferred that the heat storage tank has a fixed lower portion and an unfixed upper portion. This feature allows for expansion and contraction of the upper portion of the heat storage tank, the temperature of which varies widely, thus making it possible to separate the heat storage tank from the compressor with an increase in temperature and to bring the former into close contact with the latter with a reduction in temperature.

Embodiments of the present invention are explained hereinafter with reference to the drawings.

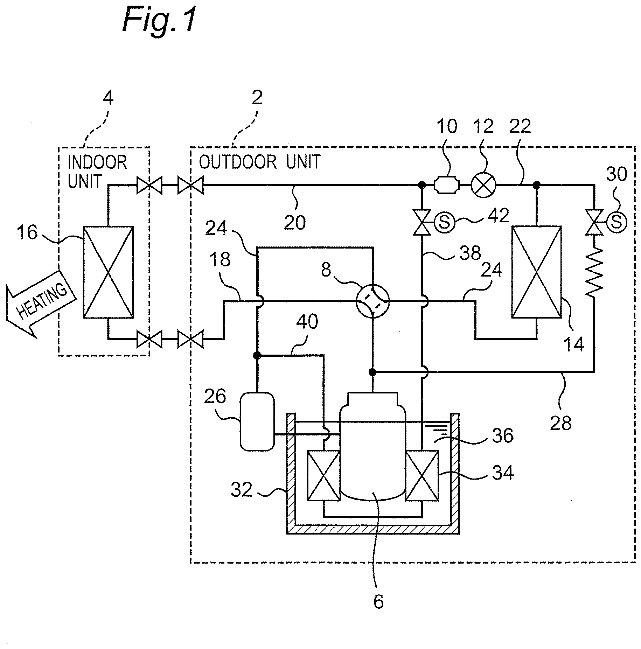

Fig. 1 depicts a piping diagram of an air conditioner having a heat storage device according to the present invention. The air conditioner includes an outdoor unit 2 and an indoor unit 4 connected to each other via refrigerant piping.

As shown in Fig. 1, the outdoor unit 2 accommodates therein a compressor 6, a four-way valve 8, a strainer 10, an expansion valve 12, and an outdoor heat exchanger 14, while the indoor unit 4 accommodates an indoor heat exchanger 16 therein. Those constituent elements are connected via refrigerant piping to define a refrigeration cycle.

More specifically, the compressor 6 and the indoor heat exchanger 16 are connected to each other via a first refrigerant pipe 18 to which the four-way valve 8 is fitted, and the indoor heat exchanger 16 and the expansion valve 12 are connected to each other via a second refrigerant pipe 20 to which the strainer 10 is fitted. Also, the expansion valve 12 and the outdoor heat exchanger 14 are connected to each other via a third refrigerant pipe 22, and the outdoor heat exchanger 14 and the compressor 6 are connected to each other via a fourth refrigerant pipe 24.

The four-way valve 8 is located midway on the fourth refrigerant pipe 24, and an accumulator 26 for separating a liquid phase refrigerant and a gas phase refrigerant is provided on the fourth refrigerant pipe 24 on a refrigerant suction side of the compressor 6. The compressor 6 and the third refrigerant pipe 22 are connected to each other via a fifth refrigerant pipe 28, on which a first solenoid valve 30 is provided.

Furthermore, a heat storage tank 32 accommodating a heat storage heat exchanger 34 therein is provided around the compressor 6 and filled with a heat storage material (for example, ethylene glycol aqueous solution) 36 for heat exchanging with the heat storage heat exchanger 34. The heat storage tank 32, the heat storage heat exchanger 34, and the heat storage material 36 constitute a heat storage device.

Also, the second refrigerant pipe 20 and the heat storage heat exchanger 34 are connected to each other via a sixth refrigerant pipe 38, and the heat storage heat exchanger 34 and the fourth refrigerant pipe 24 are connected to each other via a seventh refrigerant pipe 40. A second solenoid valve 42 is provided on the sixth refrigerant pipe 38.

The indoor unit 4 accommodates, in addition to the indoor heat exchanger 16, a fan (not shown), vertical wind direction changing blades (not shown), and horizontal wind direction changing blades (not shown). The indoor heat exchanger 16 exchanges heat between indoor air sucked into the indoor unit 4 by the fan and a refrigerant flowing through the indoor heat exchanger 16 so that air heated or cooled by the heat exchange may be blown into a room during heating or cooling, respectively. As occasion demands, the vertical wind direction changing blades vertically change the direction of air discharged from the indoor unit 4 and the horizontal wind direction changing blades horizontally change the direction of air discharged from the indoor unit 4.

The compressor 6, the fan, the vertical wind direction changing blades, the horizontal wind direction changing blades, the four-way valve 8, the expansion valve 12, the solenoid valves 30, 42, and the like are electrically connected to and controlled by a controller (for example, a microcomputer not shown).

A relation of connection and functioning of the component parts of the above-described refrigeration cycle equipment are explained hereinafter with a flow of the refrigerant, taking the case of the heating operation.

A refrigerant discharged from a discharge port in the compressor 6 passes through the four-way valve 8 and reaches the indoor heat exchanger 16 via the first refrigerant pipe 18. The refrigerant condenses in the indoor heat exchanger 16 upon heat exchange with indoor air, leaves the indoor heat exchanger 16, and passes through the second refrigerant pipe 20 and through the strainer 10, which prevents invasion of foreign substances into the expansion valve 12, before the refrigerant reaches the expansion valve 12. The refrigerant is reduced in pressure by the expansion valve 12 and reaches the outdoor heat exchanger 14 via the third refrigerant pipe 22. The refrigerant then evaporates in the outdoor heat exchanger 14 upon heat exchange with outdoor air and passes through the fourth refrigerant pipe 24, the four-way valve 8, and the accumulator 26, before the refrigerant returns to a suction port in the compressor 6.

The fifth refrigerant pipe 28 branched from the first refrigerant pipe 18 between the discharge port in the compressor 6 and the four-way valve 8 joins the third refrigerant pipe 22 between the expansion valve 12 and the outdoor heat exchanger 14 via the first solenoid valve 30.

Furthermore, the heat storage tank 32 accommodating therein the heat storage material 36 and the heat storage heat exchanger 34 is disposed so as to encircle and contact the compressor 6 to store heat generated by the compressor 6 in the heat storage material 36. The sixth refrigerant pipe 38 branched from the second refrigerant pipe 20 between the indoor heat exchanger 16 and the strainer 10 reaches an inlet of the heat storage heat exchanger 34 via the second solenoid valve 42, and the seventh refrigerant pipe 40 extending from an outlet of the heat storage heat exchanger 34 joins the fourth refrigerant pipe 24 between the four-way valve 8 and the accumulator 26.

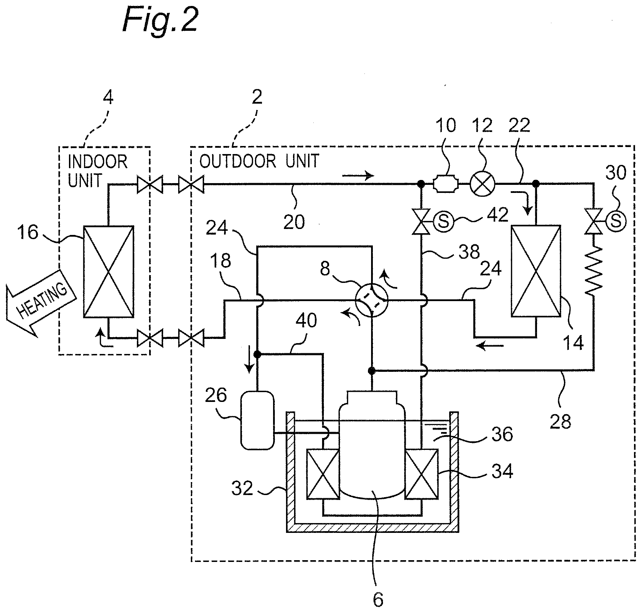

Operation of the air conditioner during normal heating is explained hereinafter with reference to Fig. 2 schematically depicting the operation of the air conditioner of Fig. 1 and a flow of the refrigerant during normal heating.

During normal heating, the first solenoid valve 30 and the second solenoid valve 42 are both closed. In this case, as described above, the refrigerant discharged from the discharge port in the compressor 6 passes through the four-way valve 8 and reaches the indoor heat exchanger 16 via the first refrigerant pipe 18. Having condensed in the indoor heat exchanger 16 upon heat exchange with indoor air, the refrigerant leaves the indoor heat exchanger 16, passes through the refrigerant pipe 20, and reaches the expansion valve 12. The refrigerant is then reduced in pressure by the expansion valve 12 and reaches the outdoor heat exchanger 14 via the third refrigerant pipe 22. Having evaporated in the outdoor heat exchanger 14 upon heat exchange with outdoor air, the refrigerant passes through the fourth refrigerant pipe 24 and through the four-way valve 8 and returns to the suction port in the compressor 6.

Heat generated by the compressor 6 is transferred from an outer wall of the compressor 6 to an outer wall of the heat storage tank 32 and stored in the heat storage material 36 accommodated in the heat storage tank 32.

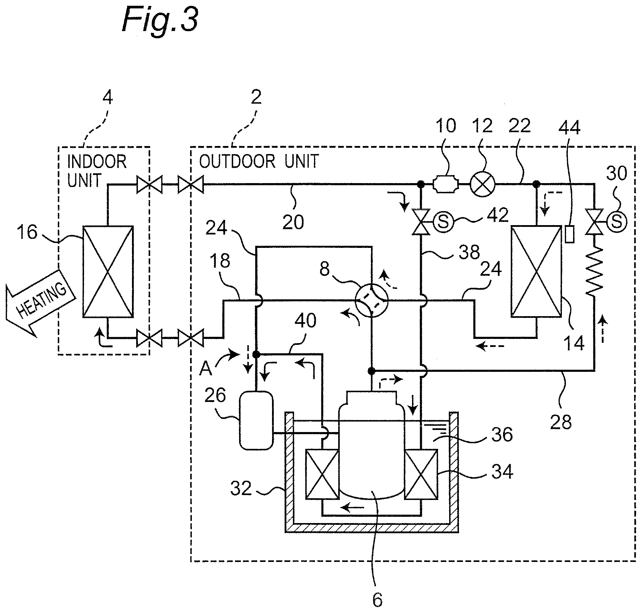

Operation of the air conditioner during defrosting/heating is next explained with reference to Fig. 3 schematically depicting the operation of the air conditioner of Fig. 1 and a flow of the refrigerant during defrosting/heating. In Fig. 3, solid arrows indicate a flow of refrigerant used for heating, and dotted arrows indicate a flow of refrigerant used for defrosting

If frost is formed and grows on the outdoor heat exchanger 14 during the above-discussed normal heating, the airflow resistance of the outdoor heat exchanger 14 increases to thereby reduce the amount of air passing therethrough, thus resulting in a reduction of the evaporating temperature in the outdoor heat exchanger 14. As shown in Fig. 3, the air conditioner according to the present invention is provided with a temperature sensor 44 for detecting a piping temperature of the outdoor heat exchanger 14, and if this temperature sensor 44 detects a reduced evaporating temperature compared with an evaporating temperature when no frost is formed, the controller outputs a command to shift the air conditioner from the normal heating operation to the defrosting/heating operation.

When the air conditioner is shifted from the normal heating operation to the defrosting/heating operation, the controller controls the first solenoid valve 30 and the second solenoid valve 42 to open them. In this case, in addition to the flow of refrigerant during the normal heating operation as discussed above, part of a gaseous refrigerant discharged from the discharge port in the compressor 6 passes through the fifth refrigerant pipe 28 and the first solenoid valve 30 and joins a refrigerant passing through the third refrigerant pipe 22 to heat the outdoor heat exchanger 14. Having condensed and turned into a liquid phase, the refrigerant passes through the fourth refrigerant pipe 24 and returns to the suction port in the compressor 6 via the four-way valve 8 and the accumulator 26.

Also, part of a liquid refrigerant diverged from the second refrigerant pipe 20 between the indoor heat exchanger 16 and the strainer 10 passes through the sixth refrigerant pipe 38 and the second solenoid valve 42 and absorbs heat from the heat storage material 36 when passing through the heat storage heat exchanger 34. The liquid refrigerant then evaporates and turns into a gas phase. The resultant gaseous refrigerant passes through the seventh refrigerant pipe 40, then joins a refrigerant passing through the fourth refrigerant pipe 24, and finally returns to the suction port in the compressor 6 via the accumulator 26.

Although the refrigerant returning to the accumulator 26 contains a liquid refrigerant returning from the outdoor heat exchanger 14, the latter is admixed with a gaseous high-temperature refrigerant returning from the heat storage heat exchanger 34 to thereby promote evaporation of the liquid refrigerant. Accordingly, it is not likely that a liquid refrigerant may pass through the accumulator 26 and return to the compressor 6, thus making it possible to enhance the reliability of the compressor 6.

At the initiation of defrosting/heating, the temperature of the outdoor heat exchanger 14 is below the freezing point by adhesion of frost, but when the outdoor heat exchanger 14 is heated by the gaseous refrigerant discharged from the discharge port in the compressor 6, frost adhering to the outdoor heat exchanger 14 melts in the vicinity of zero degree and the temperature of the outdoor heat exchanger 14 begins to increase upon termination of melting of the frost. When the temperature sensor 44 detects such a temperature rise of the outdoor heat exchanger 14, a determination is made that defrosting has been completed and the controller outputs a command to shift the defrosting/heating operation to the normal heating operation.

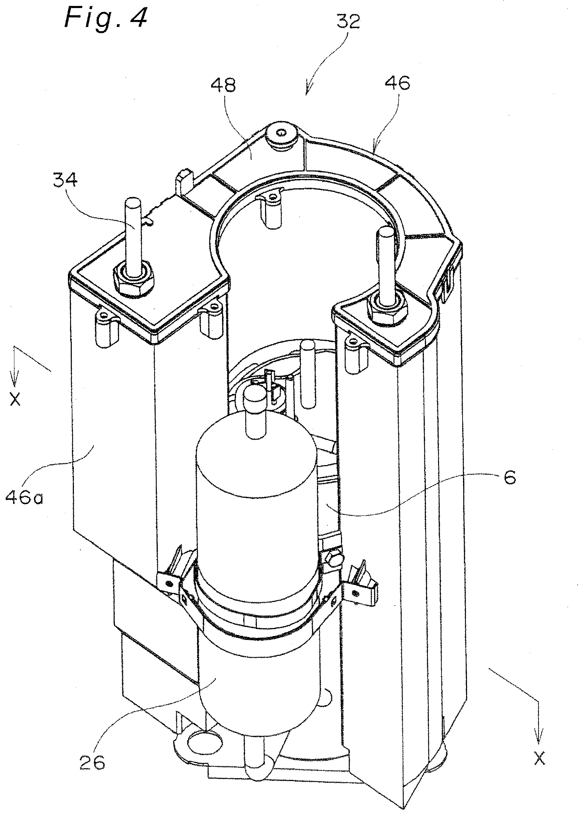

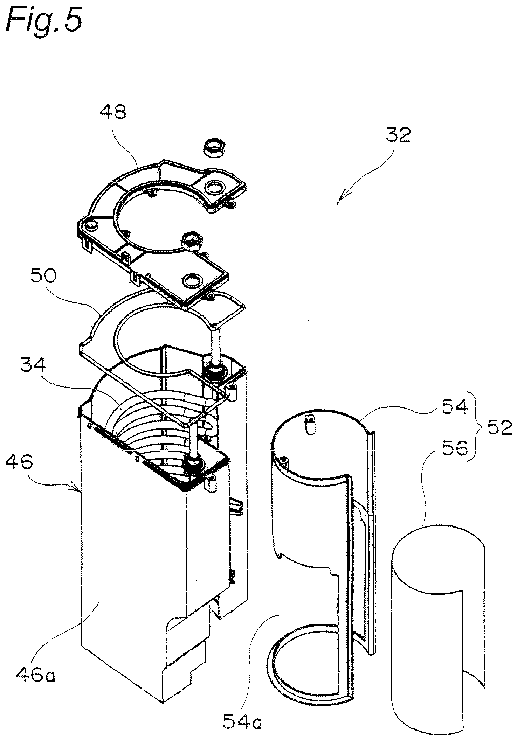

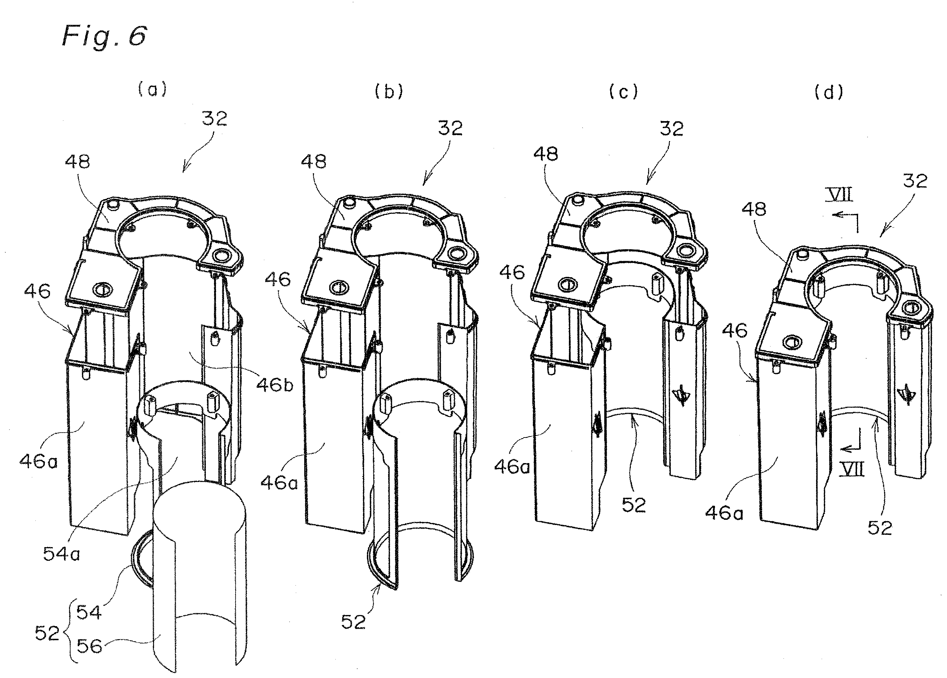

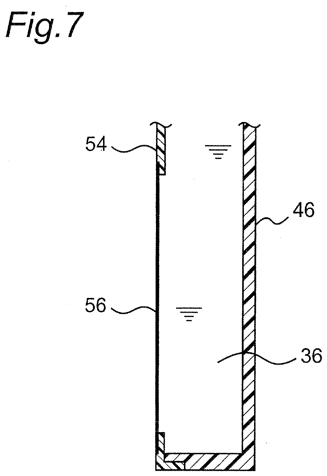

Figs. 4 to 7 depict the heat storage device. As described above, the heat storage device includes the heat storage tank 32, the heat storage heat exchanger 34 and the heat storage material 36. Fig. 4 depicts a state in which the compressor 6 and the accumulator 26 attached to the compressor 6 have been installed in the heat storage device. Fig. 5 is an exploded perspective view of the heat storage device, Fig. 6 depicts an assembling sequence of the heat storage device, and Fig. 7 is a cross-sectional view taken along a line VII-VII in Fig. 6(d).

As shown in Figs. 5 and 6, the heat storage tank 32 includes an upwardly open tank body 46 made of a resin and having a side wall 46a and a bottom wall (not shown), a lid 48 made of a resin for closing an upper opening of the tank body 46, and a packing 50 made of, for example, a silicon rubber and interposed between the tank body 46 and the lid 48. The lid 48 is screwed to the tank body 46. The side wall 46a of the tank body 46 is partly open (part of the side wall 46a confronting the compressor 6) and a contact member 52 is joined to a peripheral edge of this opening 46b to be brought into close contact with an outer surface of the compressor 6.

The contact member 52 includes a frame 54 and a sheeted member 56 and is in the form of a cylinder of a predetermined diameter, a portion of which has been cut away, as a whole. The compressor 6 is accommodated inside the contact member 52 and, hence, the inner diameter of the contact member 52 is slightly greater than the outer diameter of the compressor 6 in consideration of a mounting tolerance and the like.

The frame 54 has an opening 54a defined therein from an intermediate portion to a lower portion thereof in the vertical direction. The sheeted member 56 is joined to the frame 54 to close the opening 54a.

The heat storage heat exchanger 34 is made of, for example, a copper pipe bent into a serpentine configuration and is accommodated within the tank body 46. Also, the heat storage heat exchanger 34 has opposite ends extending upward from the lid 48. One end of the heat storage heat exchanger 34 is connected to the sixth refrigerant pipe 38 (see Fig. 1) and the other end of the heat storage heat exchanger 34 is connected to the seventh refrigerant pipe 40 (see Fig. 1). The heat storage heat exchanger 34 is accommodated in an internal space of the tank body 46, which is delimited by the side wall 46a, the bottom wall and the contact member 52 and in which the heat storage material 36 is filled.

In manufacturing the heat storage device of the above-described construction, as shown in Fig. 6(a), each of the tank body 46, the lid 48, the heat storage heat exchanger 34, the frame 54, the sheeted member 56, and the like is first formed into a predetermined shape. As shown in Fig. 6(b), the sheeted member 56 is subsequently joined to the frame 54 to close the opening 54a in the frame 54, thereby forming the contact member 52. Thereafter, as shown in Fig. 6(c), the contact member 52 is joined to the tank body 46 to close the opening 46b in the tank body 46 and, as shown in Fig. 6(d), the lid 48 is screwed to the tank body 46 and the heat storage material 36 is finally filled in the heat storage tank 32, thus completing the heat storage device.

Although the heat storage heat exchanger 34 is not shown in Fig. 6, the heat storage heat exchanger 34 is secured to the lid 48 and accommodated within the heat storage tank 32 before the lid 48 is screwed to the tank body 46.

Operation of the heat storage device of the above-described construction is explained hereinafter.

As described above, the heat storage device stores in the heat storage material 36 heat generated by the compressor during heating, and when the air conditioner is shifted from the normal heating operation to the defrosting/heating operation, part of a liquid refrigerant diverged from the second refrigerant pipe 20 between the indoor heat exchanger 16 and the strainer 10 absorbs heat from the heat storage material 36 in the heat storage heat exchanger 34. The liquid refrigerant then evaporates and turns into a gas phase. Accordingly, a higher efficiency of absorbing heat generated by the compressor 6 is desired.

The heat absorption efficiency depends on the degree of contact between the tank body 46 and the compressor 6, but because the compressor 6 is made of a metal and accordingly has an uneven outer surface, it is not easy to enhance the degree of contact between the tank body 46 and the compressor 6.

In view of this, in the heat storage device according to the present invention, the flexible contact member 52 is attached to the tank body 46. When the heat storage material 36 is filled in the heat storage tank 32, the sheeted member 56 expands toward the outer surface of the compressor 6 under liquid pressure of the heat storage material 36 and is then brought into close contact with the outer surface of the compressor 6, thereby enhancing the heat absorption efficiency.

It is therefore preferred that the sheeted member 56 be superior in heat resistance, higher in flexibility than the tank body 46, and deformable. The sheeted member 56 is made of a material such as, for example, PET (polyethylene terephthalate) or PPS (polyphenylene sulfide) and deformable depending on the liquid pressure (in particular, depending on the thickness and having no self-resilience).

When it comes to the frame 54, it is preferred in view of the joining with the sheeted member 56 that the frame 54 is made of the same material as the sheeted member 56. However, if the joint strength with the sheeted member 56 is sufficient, any heat-resistant resin can be employed.

Although the sheeted member 56 may be of a single-layered structure of a resin, in view of the thermal conductivity, strength and the like, it can be of a laminated structure in which a metal layer is laminated on a resin layer.

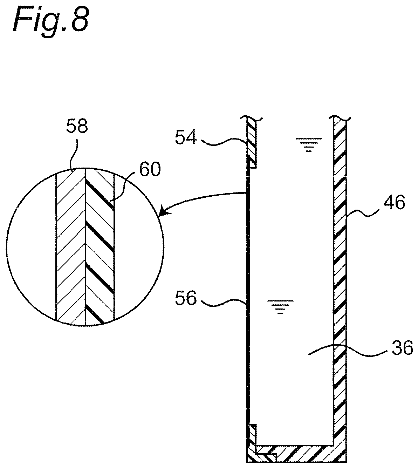

In the case of the laminated structure, as shown in Fig. 8, it is preferred that the metal layer 58 is positioned outside (on a side confronting the compressor 6) and the resin layer 60 be positioned inside (on a side held in contact with the heat storage material 36). The reason for arranging the metal layer 58 on the side of the compressor 6 is to prevent the sheeted member 56 from being damaged by, for example, an uneven outer surface of the compressor 6. Also, the reason for arranging the resin layer 60 on the side of the heat storage material 36 relative to the metal layer 58 is to prevent corrosion of the metal layer 58.

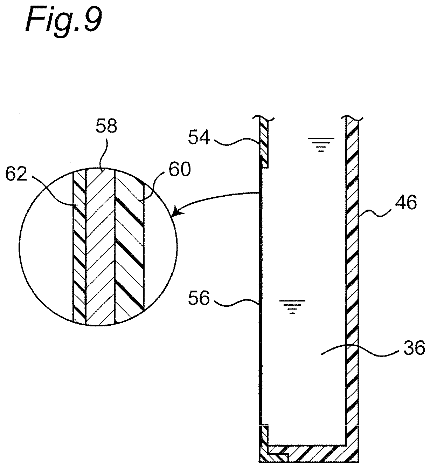

Further, as shown in Fig. 9, a second resin layer 62 may be laminated on the metal layer 58 so as to be held in close contact with the compressor 6. In this case, it is preferred that the resin layer 60 held in contact with the heat storage material 36 be thicker than the second resin layer 62. The reason for this is that the resin layer 60 acts to prevent the heat storage material 36 from penetrating into the metal layer 58 therethrough.

On the other hand, in consideration of the material (metal) of the compressor 6, a material (resin) that is greater in contractility than the material of the compressor 6 is selected as the material of the tank body 46. With this selection, when the compressor 6 is cold and the heat storage material 36 is accordingly cold, heat generated by the compressor 6 is rapidly stored in the heat storage material 36, and when the heat storage material 36 reaches a predetermined temperature (for example, 100°C), any heat is not further stored in the heat storage material 36 in the light of prevention of deterioration of the heat storage material 36.

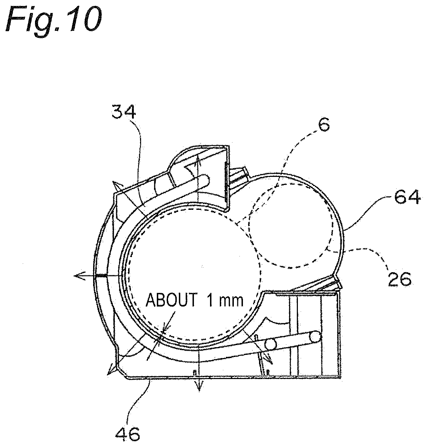

That is, as shown in Fig. 10, the inner diameter of an inner wall of the tank body 46 is set to a value slightly greater (for example, about 2 mm) than the outer diameter of the compressor 6. In assembling the heat storage tank 32 to the compressor 6, the tank body 46 is first mounted on the compressor 6 from above and then loosely fixed to the compressor 6 with a belt 64 (see Fig. 4). The loosely fixing creates a gap of about 1 mm between an inner surface of the tank body 46 and an outer surface of the compressor 6 at low temperatures after the heat storage tank 32 has been assembled to the compressor 6.

This gap is an air layer and acts as a heat insulating material, but when the refrigeration cycle is not in operation, the sheeted member 56 expands toward and is brought into contact with the outer surface of the compressor 6 under liquid pressure of the heat storage material 36, thereby eliminating the gap between the sheeted member 56 and the outer surface of the compressor 6. On the other hand, when a heating (normal heating) operation is conducted using the refrigeration cycle, the temperature of the outer surface of the compressor 6 reaches about 100°C and increases the temperature of the heat storage tank 32, and the heat storage tank 32 in turn expands in directions as indicated by arrows in Fig. 10. Although the compressor 6 also expands with an increase in temperature, the gap between the outer surface of the compressor 6 and the inner surface of the inner wall of the tank body 46 increases because a material that is greater in contractility than the material of the compressor 6 is selected as the material of the tank body 46.

As described above, because the gap acts as a heat insulating material, when the temperature of the compressor 6 becomes high, heat from the compressor 6 is difficult to be transferred to the heat storage material 36, thus making it possible to avoid boiling of water in the heat storage material 36 and also deterioration of the heat storage material 36.

Further, if the temperature of the heat storage material 36 itself reduces at the expense of heat stored in the heat storage material 36 during, for example, defrosting/heating, the heat storage tank 32 contracts. As a result, the gap between the outer surface of the compressor 6 and the inner surface of the tank body 46 reduces, and the inner surface of the tank body 46 moves toward the outer surface of the compressor 6, thus enhancing the degree of contact of the sheeted member 56 with the outer surface of the compressor 6 and accordingly making it possible to successfully transfer heat generated by the compressor 6 to the heat storage material 36.

Also, the temperature of the heat storage material 36 accommodated within the heat storage tank 32 varies depending on the vertical position of the heat storage material in the heat storage tank 32. The lower the vertical position, the lower the temperature is, and the higher the vertical position, the higher the temperature is. Accordingly, the degree of expansion and contraction of the heat storage tank 32 increases with an increase in vertical position thereof.

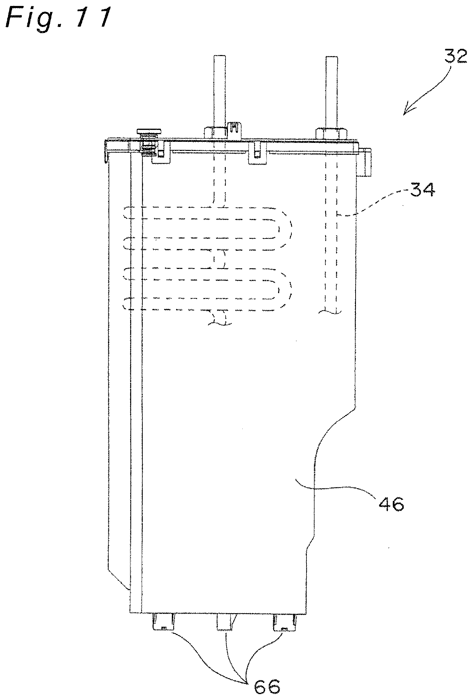

In view of this, in the practice of the present invention, as shown in Fig. 11, the heat storage tank 32 is fixed to a bottom plate (not shown) of the indoor unit via a plurality of (for example, three) mounting pieces 66 formed on a bottom wall of the heat storage tank 32. That is, only a lower portion of the heat storage tank 32 is fixed (restrained), while an upper portion of the heat storage tank 32 is not fixed (not restrained) for the purpose of efficiently transferring heat from the compressor 6 to the heat storage material 36. More specifically, when the temperature of the heat storage tank 32 becomes high, no restraint of the upper portion of the heat storage tank 32 causes a high-temperature portion of the heat storage tank 32 to move away from the compressor 6, and when the temperature of the heat storage tank 32 becomes low, the heat storage tank 32 is brought into close contact with the compressor 6 to thereby expedite heat storage.

The side wall of the tank body 46 is preferably made of the following material in terms of expansion and contraction, and the thickness thereof is preferably in the range of 1.0-3.0 mm. The reason for this is that the side wall of the tank body 46 has a self-restoring force (deformable depending on temperature changes) in an elastic deformation region.
- Material greater in contractility than the material of the compressor 6
- Material having a self-restoring force (deformable depending on temperature changes) in the elastic deformation region
- Material having a linear expansion coefficient greater than that of the compressor 6

More specifically, a resin such as, for example, PPS (polyphenylene sulfide), PBT (polybutylene terephthalate), PS (polystyrene), PP (polypropylene) or the like can be employed as a material of the side wall of the tank body 46. These materials have the following linear expansion coefficients, respectively.
- Linear expansion coefficient of PPS: 23-32 x 10⁻⁶/K
- Linear expansion coefficient of PBT: about 94 x 10⁻⁶/K
- Linear expansion coefficient of PS: about 70 x 10⁻⁶/K
- Linear expansion coefficient of PP: about 110 x 10⁻⁶/K

Because the linear expansion coefficients of the resins vary considerably with the grades, fillers or the like, representative examples are indicated above.

In the case where steel is employed as the material of the compressor 6, the linear expansion coefficient thereof is 10-12 x 10⁻⁶ /K, which is less than the linear expansion coefficient of the resin, i.e., the material of the tank body 46.

In the above-described embodiments, a portion of the side wall 46a confronting the compressor 6 has been described as being open and the contact member 52 is joined to a peripheral edge of this opening 46b to be brought into close contact with an outer surface of the compressor 6. However, the present invention is not limited to such a configuration and the heat storage tank 32 may be of a type having a side wall 46a with no opening 46b.

### Industrial Applicability

Because the heat storage device according to the present invention can prevent deterioration of a heat storage material that stores therein heat generated by a compressor, the heat storage device according to the present invention is effectively applicable to air conditioners, refrigerators, water heaters, heat pump washing machines, and the like.

### Explanation of reference numerals

2 outdoor unit, 4 indoor unit, 6 compressor, 8 four-way valve, 10 strainer, 12 expansion valve, 14 outdoor heat exchanger, 16 indoor heat exchanger, 18 first refrigerant pipe, 20 second refrigerant pipe, 22 third refrigerant pipe, 24 fourth refrigerant pipe, 26 accumulator, 28 fifth refrigerant pipe, 30 first solenoid valve, 32 heat storage tank, 34 heat storage heat exchanger, 36 heat storage material, 38 sixth refrigerant pipe, 40 seventh refrigerant pipe, 42 second solenoid valve, 44 temperature sensor. 46 heat storage tank body, 46a side wall, 46b opening in side wall, 48 lid, 50 packing, 52 contact member, 54 frame, 54a opening, 56 sheeted member, 58 metal layer, 60 resin layer, 62 second resin layer, 64 belt, 66 mounting piece.

## Claims

1. An air conditioner comprising a compressor (6), and a heat storage device disposed around the compressor (6), the heat storage device comprising:
a heat storage material (36), a heat storage tank (32) to accommodate the heat storage material (36) and a heat storage heat exchanger (34) in an internal space of a tank body (46) delimited by an outer side wall (46a), a bottom wall, and an inner wall, wherein heat generated by the compressor (6) is transferred through the inner wall of the tank body (46) and stored in the heat storage material (36),
**characterised in**
**that** a material of the tank body (46) has a greater contractility than a material of the compressor (6) such that a degree of contact between the compressor (6) and the inner wall of the tank body (46) is changed depending on temperature changes of the compressor (6), in that:
i) the degree of contact is increased at a low temperature thereby increasing a heat-transfer performance from the compressor (6) to the heat storage material (36), and
ii) the degree of contact is reduced at a high temperature thereby reducing the heat-transfer performance from the compressor (6) to the heat storage material (36).

2. The air conditioner according to claim 1, wherein the tank body (46) of the heat storage tank (32) has a side wall (46a) having a self-restoring force in an elastic deformation region.

3. The air conditioner according to claim 1, wherein the heat storage tank (32) is mounted to the compressor (6) with a gap between the inner wall of the tank body (46) and an outer surface of the compressor (6).

4. The air conditioner according to claim 1, wherein the compressor (6) is made of a metal and the heat storage tank (32) is made of a resin.

5. The air conditioner according to claim 1, wherein the tank body (46) of the heat storage tank (32) has a side wall (46a) having a thickness of 1.0-3.0 mm.

6. The air conditioner according to claim 1, wherein the heat storage tank (32) has a fixed lower portion and an unfixed upper portion.

7. The air conditioner according to claim 1, wherein the inner wall comprises a sheeted member (56) which expands towards an outer surface of the compressor under liquid pressure of the heat storage material (36).

8. The air conditioner according to claim 7, wherein the sheeted member (56) has a laminated structure with a metal layer laminated on a resin layer.

9. The air conditioner according to claim 8, wherein the metal layer (58) is positioned on a side confronting the compressor (6).

10. The air conditioner according to claim 9, wherein a further resin layer (62) is laminated on the metal layer (58).

## Patentansprüche

1. Klimaanlage, die einen Verdichter (6) und eine um den Verdichter (6) herum angeordnete Wärmespeichervorrichtung umfasst, wobei die Wärmespeichervorrichtung umfasst:
ein Wärmespeichermaterial (36),
einen Wärmespeichertank (32), um das Wärmespeichermaterial (36) und einen Wärmespeicher-Wärmetauscher (34) in einem Innenraum eines Tankkörpers (46), der durch eine äußere Seitenwand (46a), eine Bodenwand und eine Innenwand abgegrenzt ist, aufzunehmen, wobei durch den Verdichter (6) erzeugte Wärme durch die Innenwand des Tankkörpers (46) übertragen und im Wärmespeichermaterial (36) gespeichert wird,
**dadurch gekennzeichnet,**
**dass** ein Material des Tankkörpers (46) eine größere Kontraktilität als ein Material des Verdichters (6) aufweist, so dass ein Kontaktgrad zwischen dem Verdichter (6) und der Innenwand des Tankkörpers (46) in Abhängigkeit von Temperaturänderungen des Verdichters (6) geändert wird, indem:
i) der Kontaktgrad bei einer niedrigen Temperatur erhöht wird, wodurch eine Wärmeübertragungsleistung von dem Verdichter (6) zu dem Wärmespeichermaterial (36) erhöht wird, und
ii) der Kontaktgrad bei einer hohen Temperatur verringert wird, wodurch die Wärmeübertragungsleistung von dem Verdichter (6) zu dem Wärmespeichermaterial (36) verringert wird.

2. Klimaanlage nach Anspruch 1, wobei der Tankkörper (46) des Wärmespeichertanks (32) eine Seitenwand (46a) aufweist, die eine Selbstrückstellkraft in einem elastischen Verformungsbereich aufweist.

3. Klimaanlage nach Anspruch 1, wobei der Wärmespeichertank (32) mit einer Lücke zwischen der Innenwand des Tankkörpers (46) und einer Außenfläche des Verdichters (6) an dem Verdichter (6) montiert ist.

4. Klimaanlage nach Anspruch 1, wobei der Verdichter (6) aus einem Metall gefertigt ist und der Wärmespeichertank (32) aus einem Harz gefertigt ist.

5. Klimaanlage nach Anspruch 1, wobei der Tankkörper (46) des Wärmespeichertanks (32) eine Seitenwand (46a) aufweist, die eine Dicke von 1,0-3,0 mm aufweist.

6. Klimaanlage nach Anspruch 1, wobei der Wärmespeichertank (32) einen befestigten unteren Abschnitt und einen nicht befestigten oberen Abschnitt aufweist.

7. Klimaanlage nach Anspruch 1, wobei die Innenwand ein geschichtetes Element (56) aufweist, das sich in Richtung einer Außenfläche des Verdichters unter Flüssigkeitsdruck des Wärmespeichermaterials (36) ausdehnt.

8. Klimaanlage nach Anspruch 7, wobei das geschichtete Element (56) eine laminierte Struktur mit einer Metallschicht aufweist, die auf eine Harzschicht laminiert ist.

9. Klimaanlage nach Anspruch 8, wobei die Metallschicht (58) auf einer dem Verdichter (6) gegenüberliegenden Seite angebracht ist.

10. Klimaanlage nach Anspruch 9, wobei eine weitere Harzschicht (62) auf die Metallschicht (58) laminiert ist.

## Revendications

1. Climatiseur comprenant un compresseur (6) et un dispositif de stockage de chaleur disposé autour du compresseur (6), le dispositif de stockage de chaleur comprenant :
un matériel de stockage de chaleur (36),
un réservoir de stockage de chaleur (32) pour accueillir le matériel de stockage de chaleur (36) et un accumulateur-échangeur de chaleur (34) dans un espace intérieur d'un corps de réservoir (46) délimité par une paroi latérale extérieure (46a), une paroi de fond et une paroi intérieure, la chaleur générée par le compresseur (6) étant transférée par la paroi intérieure du corps de réservoir (46) et stockée dans le matériel de stockage de chaleur (36),
**caractérisé en ce**
**qu'**un matériel du corps de réservoir (46) a une contractilité plus importante qu'un matériel du compresseur (6) de sorte qu'un degré de contact entre le compresseur (6) et la paroi intérieure du corps de réservoir (46) est changé en fonction des changements de température du compresseur (6), où :
i) le degré de contact est augmenté à une basse température ainsi accroissant un rendement du transfert de chaleur du compresseur (6) au matériel de stockage de chaleur (36), et
ii) le degré de contact est abaissé à une haute température ainsi réduisant le rendement du transfert de chaleur du compresseur (6) au matériel de stockage de chaleur (36).

2. Climatiseur selon la revendication 1, le corps de réservoir (46) du réservoir de stockage de chaleur (32) ayant une paroi latérale (46a) présentant une force de rappel autonome dans une zone de déformation élastique.

3. Climatiseur selon la revendication 1, le réservoir de stockage de chaleur (32) étant fixé au compresseur (6) avec un écart entre la paroi intérieure du corps de réservoir (46) et une surface extérieure du compresseur (6).

4. Climatiseur selon la revendication 1, le compresseur (6) étant fabriqué en métal et le réservoir de stockage de chaleur (32) étant fabriqué en résine.

5. Climatiseur selon la revendication 1, le corps de réservoir (46) du réservoir de stockage de chaleur (32) ayant une paroi latérale (46a) d'une épaisseur de 1,0 à 3,0 mm.

6. Climatiseur selon la revendication 1, le réservoir de stockage de chaleur (32) ayant une partie basse fixe et une partie haute non fixée.

7. Climatiseur selon la revendication 1, la paroi intérieure comprenant un élément en feuille (56) qui s'étend vers une surface extérieure du compresseur sous pression liquide du matériel de stockage de chaleur (36).

8. Climatiseur selon la revendication 7, l'élément en feuilles (56) ayant une structure stratifiée avec une couche métallique stratifiée sur une couche de résine.

9. Climatiseur selon la revendication 8, la couche métallique (58) étant positionnée sur un côté en face du compresseur (6).

10. Climatiseur selon la revendication 9, une autre couche de résine (62) étant stratifiée sur la couche métallique (58).
